(19) Europäisches Patentamt / European Patent Office / Office européen des brevets

(11) **EP 1 510 726 B1**

(12) **EUROPEAN PATENT SPECIFICATION**

(45) Date of publication and mention
of the grant of the patent:
**19.11.2008 Bulletin 2008/47**

(51) Int Cl.:
*F16G 5/20* (2006.01)     *F16G 5/06* (2006.01)

(21) Application number: **04020047.9**

(22) Date of filing: **24.08.2004**

(54) **Friction drive belt and method for fabricating the same**

Reibungs-antriebsriemen und Herstellungsverfahren dafür

Courroie d'entraînement à friction et son procédé de fabrication

(84) Designated Contracting States:
**DE GB TR**

(30) Priority: **25.08.2003 JP 2003299737**

(43) Date of publication of application:
**02.03.2005 Bulletin 2005/09**

(73) Proprietor: **Bando Chemical Industries, Ltd.
Kobe-shi,
Hyogo 652-0883 (JP)**

(72) Inventor: **Shibutani, Tomoya
Hyogo-ku
Kobe-shi
Hyogo 652-0883 (JP)**

(74) Representative: **Thoma, Michael et al
Lorenz - Seidler - Gossel
Widenmayerstrasse 23
80538 München (DE)**

(56) References cited:
**EP-A- 0 596 713         EP-A- 1 225 368
US-A- 4 083 261         US-A- 4 305 714
US-A- 4 432 744         US-A- 5 244 436
US-A- 5 643 378**

• **PATENT ABSTRACTS OF JAPAN vol. 017, no. 212 (M-1402), 26 April 1993 (1993-04-26) -& JP 04 351351 A (BANDO CHEM IND LTD), 7 December 1992 (1992-12-07)**
• **PATENT ABSTRACTS OF JAPAN vol. 1995, no. 06, 31 July 1995 (1995-07-31) -& JP 07 063242 A (BANDO CHEM IND LTD), 7 March 1995 (1995-03-07)**
• **PATENT ABSTRACTS OF JAPAN vol. 2002, no. 03, 3 April 2002 (2002-04-03) -& JP 2001 317595 A (MITSUBOSHI BELTING LTD), 16 November 2001 (2001-11-16)**
• **PATENT ABSTRACTS OF JAPAN vol. 1999, no. 03, 31 March 1999 (1999-03-31) -& JP 10 338377 A (NITTA IND CORP), 22 December 1998 (1998-12-22)**
• **PATENT ABSTRACTS OF JAPAN vol. 2000, no. 22, 9 March 2001 (2001-03-09) -& JP 2001 146942 A (MITSUBOSHI BELTING LTD), 29 May 2001 (2001-05-29)**

EP 1 510 726 B1

**Description**

BACKGROUND OF THE INVENTION

(a) Field of the Invention

This invention relates to a friction drive belt according to the preamble of claim 1 and a method for fabricating the same.

(b) Description of the Related Art

Such V-ribbed belts as known from US 5,643,378 are generally used as automotive engine accessory drive belts. V-ribbed belts have a belt body made of rubber, of which a ribbed rubber layer (working part) contacting with a pulley contains short fibers oriented along the width of the belt. Furthermore, the short fibers contained in the belt body project beyond the belt surface. This reduces the friction resistance of the belt surface, leading to reduction of abnormal sounds produced between the belt and the pulley and reduction of abrasion at the belt surface.

Japanese Unexamined Utility Model Publication No. 6-40497 discloses a V-ribbed belt having a double-layered, ribbed rubber in which short fibers embedded into a rib top-side portion are oriented substantially along the length of the belt and short fibers embedded into the remaining rib root-side portion are oriented substantially orthogonally to the length direction of the belt. The document describes that when the belt is wrapped around a flat pulley in order to use it as a flat belt, an unpleasant stick-slip sound can be prevented from being produced in the belt travel.

Japanese Unexamined Patent Publication No. 7-63242 discloses a V-ribbed belt comprising a ribbed rubber layer formed of hydrogenated acrylonitrile-butadiene rubber (H-NBR), a tension member layer adjoining the ribbed rubber layer, and a top fabric layer adjoining the tension member layer, wherein part of the H-NBR rubber forming each rib root of the ribbed rubber layer is compounded with short fibers oriented substantially along the width of the belt, and part of the H-NBR rubber forming each rib top of the ribbed rubber layer is compounded with unsaturated carboxylic acid's metal salt. This document describes that the V-ribbed belt has excellent heat resistance, abrasion resistance and flex fatigue resistance even when used under severe conditions such as increasing atmospheric temperature, is free from troubles such as abrasion-induced failures, and therefore has a long life.

Japanese Examined Utility Model Publication No. 7-29330 discloses a V-belt for power transmission in which an adhesion rubber layer contains short fibers oriented along the belt width, a tension member layer is formed of a tension cord embedded in the adhesion rubber layer, a tension layer is laid on the tension member layer, and a compression rubber layer is laid under the tension rubber layer. Furthermore, a cord fabric is embedded in the rubber forming the compression rubber layer, a reinforcing rubber layer is formed, between the tension member layer and the cord fabric, with short fibers of the same type as in the adhesion rubber layer mixed thereinto in an orientation along the belt width and in higher volume per unit rubber weight than that of the short fibers in the adhesion rubber layer. The document describes: that the existence of the reinforcing rubber layer prevents the cord fabric from causing their abnormal approach to the tension cord and their disordering in embedded arrangement during the vulcanisation of the belt, and absorbs the difference in the resistance against a lateral force from extremely sideward between the tension member layer and the cord fabric during the belt travel; and that since the reinforcing rubber layer exists to have a definite hardness difference from the adhesion rubber layer by intentionally increasing the amount of short fibers therein over that in the adhesion rubber layer, this contributes to avoidance of direct contact between the tension cord and the transversely parallel-arranged cords and suppresses the occurrence of delamination therebetween and, in the worst case, protrusion of the tension cord, resulting in enhanced belt durability.

Japanese Unexamined Patent Publication No. 10-338377 discloses an endless conveyer belt having a belt body formed of an elastic material and short fibers dispersed into the elastic material, wherein the short fibers have a length of 1mm to 10mm and a fineness of 0.5 denier to 30 denier, are mixed into the elastic material at a weight % of 1 to 30, and are dispersed into the whole belt body in an orientation along the belt length. The document describes that the belt is relatively thin and relatively high in coefficient of friction at its one side.

Japanese Unexamined Patent Publication No. 2001-146942 discloses a drive belt in which a cord is embedded along the belt length into an adhesion rubber layer, a cover fabric is stacked on the surface of the adhesion rubber layer, a compression rubber layer is disposed adjacent the adhesion rubber layer, and the compression rubber layer is formed so that at least one particle-dispersed rubber layer composed of rubber containing dispersed particulate inorganic material is interbedded in a short-fiber-mixed rubber layer composed of rubber containing dispersed short fibers. The document describes that since the drive belt includes the particle-dispersed rubber layer capable of keeping high the thicknesswise surface roughness of the belt working flank contacting with a pulley, it can exhibit high power transmission performance even with water on the working flank, has enhanced running life in a high temperature atmosphere and in a low temperature atmosphere, and is excellent in weather resistance.

Japanese Unexamined Patent Publication No. 2001-317595 discloses a drive belt having a V-rib provided along the belt length, wherein a plurality of rubber layers composed of those of rubber type compounded with short fibers and those of rubber type compounded with no short fiber are stacked, and the V-rib is formed of a combination of stacking of both types of rubber layers to control the coefficient of friction of the belt side face. The document describes that various kinds of V-ribs can be produced using multiple levels of coefficients of friction without the need for design change in composition of the rubber compound for the V-rib.

Meanwhile, a V-ribbed belt is fabricated by wrapping around a moulding drum materials including an unvulcanised rubber sheet, a woven fabric and a cord and then applying heat and pressure to the wrapped materials. In this case, used as the unvulcanised rubber sheet forming a ribbed rubber layer of the belt body is one containing short fibers oriented substantially perpendicularly to the direction of wrapping around the moulding drum.

Such an unvulcanised rubber sheet as containing short fibers oriented in a single direction is produced by extending an unvulcanised rubber mass containing short fibers in the form of a sheet by a calender roll or other means. The unvulcanised rubber sheet thus produced contains short fibers oriented in the longitudinal direction of the sheet.

Therefore, in fabricating a V-ribbed belt, the elongate, short-fiber-containing, unvulcanised rubber sheet cannot be used as it is with its lengthwise direction aligned with the direction of wrapping around the moulding drum, but needs to be cut in a slightly shorter length than the axial length of the drum and used as wrapped around the moulding drum to align both the cut ends with both ends of the moulding drum.

SUMMARY OF THE INVENTION

An object of the present invention is to provide a friction drive belt having a novel construction that uses no short fiber-containing rubber, and a method for fabricating the same.

The present invention achieves this object by a V-ribbed belt according to claim 1, which can be fabricated by a method according to claim 4. Preferred embodiments of the invention are laid down in the dependent claims.

The present invention is directed to a friction drive belt, used by being wrapped around a plurality of pulleys, for transmitting power by friction between its belt body and each of the pulleys. In the friction drive belt, a working part of the belt body through which power is transmitted has a structure in which one or more rubber layers and one or more non-woven fabric layers are alternately stacked along the thickness oft he belt.

According to the friction drive belt having the above structure, the non-woven fabric layer or layers exposed at the belt surface reduce the friction resistance at the belt surface, and therefore suppress abnormal sounds produced between the belt surface and the pulley and friction at the belt surface. That is, the friction drive belt of this invention has the same belt performance as a friction drive belt in which the working part of its belt body is formed of short-fiber-containing rubber.

The non-woven fabric layer or layers of the working part have a total thickness of 25 % to 75 %, both inclusive, of the thickness of the working part.

When the total thickness of the non-woven fabric layer or layers is 25 % to 75 %, both inclusive, of the thickness of the working part, the belt can play a fundamental role of power transmission and effectively reduce the coefficient of friction at the belt surface. More specifically, as described later with reference to Examples, if the total thickness of non-woven fabric layers is less than 25 % of the thickness of the working part, abrasion at the belt surface during travel is significantly increased. On the other hand, if the total thickness of non-woven fabric layers is more than 75 % of the thickness of the working part, the belt flex resistance is extremely deteriorated.

A friction drive belt of the present invention as described above can be fabricated by forming, on the outer periphery of a moulding drum, a structure in which one or more unvulcanised rubber layers and one or more non-woven fabric layers are alternately stacked to cover the whole circumference of the moulding drum; and applying heat and pressure to the layered structure of the unvulcanised rubber layer or layers and the non-woven fabric layer or layers to provide an integral lamination. Therefore, there is no need to cut a short-fiber-containing unvulcanised rubber sheet in an appropriate length and align the orientation of short fibers with the belt widthwise direction, unlike the case of fabricating a friction drive belt in which the working part of its belt body is made from short-fiber-containing rubber.

The types of friction drive belts according to the present invention are friction drive belts in which the belt body is that of a V-ribbed belt. V-ribbed belts are generally used for automotive accessory drive and produced much more than the other types of belts. Therefore, when the friction drive belt of the present invention is a V-ribbed belt, general belt productivity growth can be best achieved.

Other objects, features and benefits will be apparent from the following description referring to the accompanying drawings.

BRIEF DESCRIPTION OF THE DRAWINGS

FIG. **1** is a perspective view showing a V-ribbed belt according to an embodiment of the present invention.

FIGS. **2A** and **2B** are diagrams illustrating a method for fabricating a V-ribbed belt.

FIG. **3** is a diagram illustrating the layout of a serpentine accessory drive system in which a V-ribbed belt is wrapped around pulleys.

FIGS. **4A** to **4K** are cross-sectional views showing various modifications of the inventive V-ribbed belt.

FIG. **5** illustrates a belt coefficient-of-friction measurement tester used for measuring the coefficient of friction at the ribbed rubber layer surface.

FIG. **6** is a diagram illustrating the layout of a belt run tester for evaluating V-ribbed belts based on an abrasion resistance test.

FIG. **7** is a diagram illustrating the layout of a belt run tester for running durability evaluation on V-ribbed belts.

FIG. **8** is a diagram illustrating the layout of a belt run tester for noiselessness evaluation on V-ribbed belts.

FIGS. **9A** and **9B** are graphs showing the relation between the total thickness of non-woven fabric layers and coefficient of friction.

FIGS. **10A** and **10B** are graphs showing the relation between the total thickness of non-woven fabric layers and rate of abrasion.

FIGS. **11A** and **11B** are graphs showing the relation between the total thickness of non-woven fabric layers and durability.

FIGS. **12A** and **12B** are graphs showing the relation between the total thickness of non-woven fabric layers and noiselessness.

FIG. **13** is a table showing belt structures and test evaluation results.

DESCRIPTION OF THE PREFERRED EMBODIMENTS

Hereinafter, an embodiment of the present invention will be described in detail with reference to the drawings.

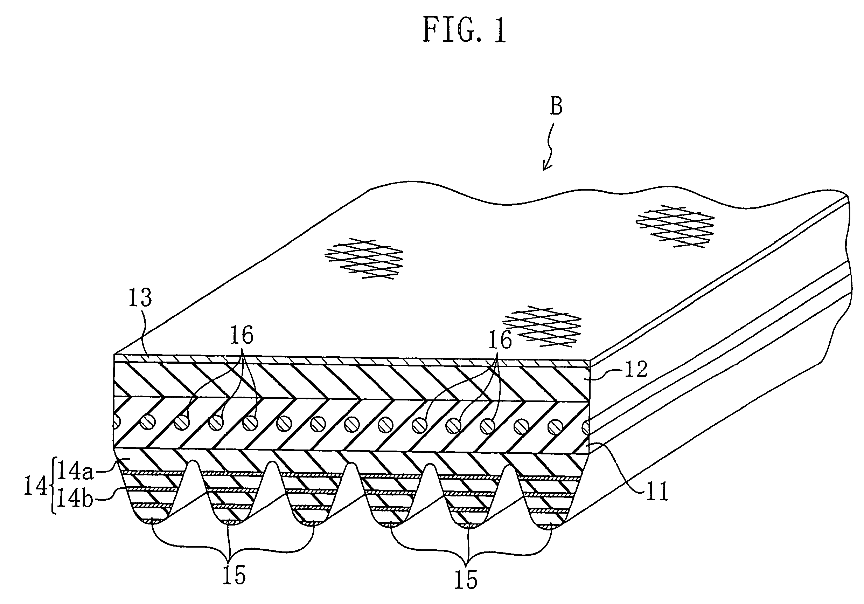

FIG. **1** shows a V-ribbed belt **B** according to an embodiment of the present invention.

The V-ribbed belt **B** is composed of an adhesion rubber layer **11**, a tension rubber layer **12** provided integrally on the upper face of the adhesion rubber layer **11**, a back face reinforcing fabric **13** attached integrally to the upper face of the tension rubber layer **12**, i.e., provided on the belt back face side thereof, a ribbed rubber layer **14** provided integrally on the lower face of the adhesion rubber layer **11**, i.e., on the belt inner face side thereof, a cord **16** disposed to form helical turns extending substantially along the length of the belt in the middle of the thickness of the adhesion rubber layer **11** and spaced at regular intervals in the belt widthwise direction. Among these members, the adhesion rubber layer **11**, the tension rubber layer **12** and the ribbed rubber layer **14** constitute a V-ribbed belt body.

The adhesion rubber layer **11** forms a flat looped strip located in the middle of the V-ribbed belt body to extend along the length of the belt, is made from a rubber composition containing a rubber component such as chloroprene rubber (CR), ethylene-propylene-diene monomer (EPDM) or hydrogenated acrylonitrile-butadiene rubber (H-NBR), and serves as a layer for retaining the cord.

The tension rubber layer **12** forms a flat looped strip located on the adhesion rubber layer **11** in the V-ribbed belt body to extend along the length of the belt, and is made from a rubber composition containing a rubber component such as chloroprene rubber (CR), ethylene-propylene-diene monomer (EPDM) or hydrogenated acrylonitrile-butadiene rubber (H-NBR).

The back face reinforcing fabric **13** is formed by subjecting a woven fabric of warps and wefts made from nylon fibers, cotton or the like to adhesion treatment with rubber cement obtained by solving rubber in a solvent, and constitutes a reinforcing member for reinforcing the belt back face.

The ribbed rubber layer **14** is a portion of the V-ribbed belt body in which six ribs **15** are disposed, under the adhesion rubber layer **11**, at regular pitches in the belt widthwise direction to extend along the length of the belt. The ribbed rubber layer **14** has a structure in which rubber layers **14a** and non-woven fabric layers **14b** are alternately stacked, and constitutes a working part for transmitting power to a pulley by directly contact with it. Each rubber layer **14a** forming the ribbed rubber layer **14** is made from a rubber composition containing a rubber component such as chloroprene rubber (CR), ethylene-propylene-diene monomer (EPDM) or hydrogenated acrylonitrile-butadiene rubber (H-NBR), like the adhesion rubber layer **11**. The rubber composition forming the rubber layer **14a** may contain short fibers. The non-woven fabric layer **14b** is formed by subjecting, prior to the moulding of a belt, a sheet of non-woven fabric made of chemical fibers such as nylon fibers, polyester fibers or aramid fibers, or natural fibers such as cotton to adhesion treatment with, for example, resorcinol-formaldehyde latex (RFL) liquid or rubber cement. The proportion of non-woven fabric layers **14b** that is contained in the ribbed rubber layer **14** is greater toward the belt inner periphery than toward the belt outer periphery, and the rib top is constituted by a non-woven fabric layer **14b**. The total thickness of the non-woven fabric layers **14b** is 15% to 75%, both inclusive, of the thickness of the ribbed rubber layer **14**, i.e., the rib height.

The cord **16** is formed by subjecting, prior to the moulding of a belt, a twist yarn (Z-twisted) made of polyethylene terephthalate (PET) fibers, polyethylene naphthalate (PEN) fibers or polyvinyl alcohol (PVA) fibers to adhesion treatment with resorcinol-formaldehyde latex (RFL) liquid or the like and stretch thermoforming process, and constitutes a tension member that gives strength and tensile strength to the belt.

According to the V-ribbed belt **B** having the above structure, the non-woven fabric layers **14b** of the ribbed rubber layer **14** reduce the friction resistance at the belt surface, and therefore suppress abnormal sounds produced between the belt surface and the pulley and friction at the belt surface. That is, the V-ribbed belt **B** has the same belt performance as a V-ribbed belt in which a ribbed rubber layer serving as a working part is formed of short-fiber-containing rubber.

The shearing force acting on the belt becomes larger, in the working part, toward the belt outer periphery than toward the belt inner periphery. Therefore, if the proportion of non-woven fabric layers **14b** contained in the ribbed rubber layer **14** becomes greater toward the belt outer periphery, the risk of delamination is increased. Since in this embodiment, however, the proportion of non-woven fabric layers **14b** contained in the ribbed rubber layer **14** is greater toward the belt inner periphery than toward the belt outer periphery, delamination is less likely to occur.

Furthermore, since the total thickness of the non-woven fabric layers **14b** is 15% to 75%, both inclusive, of the thickness of the ribbed rubber layer **14**, the belt can play a fundamental role of power transmission and effectively reduce the coefficient of friction at the belt surface.

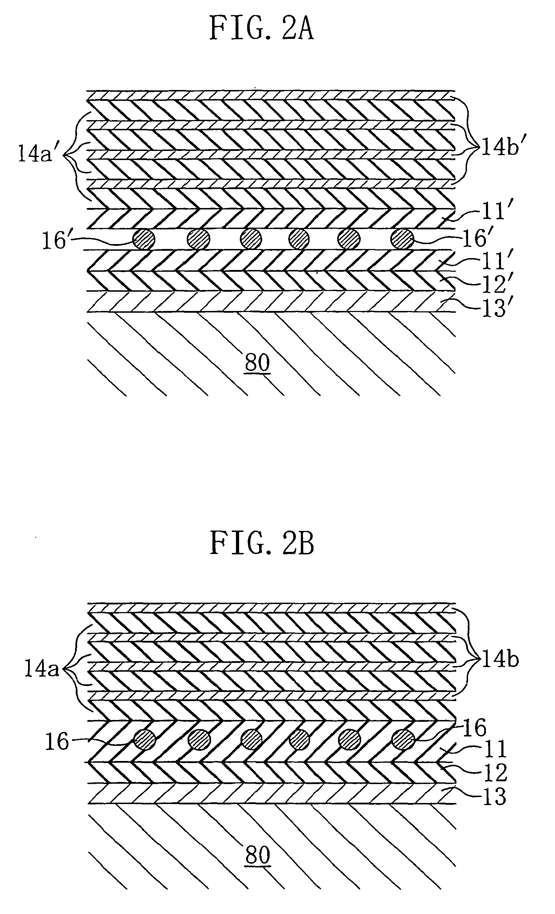

Next, a description will be made of a method for fabricating the V-ribbed belt **B** with reference to FIGS. **2A** and **2B**.

First, materials for the fabrication of a V-ribbed belt **B** are prepared as follows: a first unvulcanised rubber sheet **12'** for the formation of a tension rubber layer **12**, two second unvulcanised rubber sheets **11'** for the formation of an adhesion rubber layer **11**, a plurality of third unvulcanised rubber sheets **14a'** for the formation of rubber layers **14a** in a ribbed rubber layer **14**, a plurality of adhesion-treated (or non-adhesion-treated) non-woven fabric sheets **14b'** (of 0.02mm to 1.50mm thickness) for the formation of non-woven fabric layers **14b** in the ribbed rubber layer **14**, an adhesion-treated woven fabric **13'** for the formation of a back face reinforcing fabric **13**, and an adhesion-treated twist yarn **16'** for the formation of a cord 16.

Next, the woven fabric **13'** formed in a cylinder is wrapped over the moulding drum **80** to fit on it, the first unvulcanised rubber sheet **12'** is then wrapped around the woven fabric **13'** a predetermined number of times, and one of the second unvulcanised rubber sheets **11'** is then wrapped around a predetermined number of times.

Then, the twist yarn **16'** is wound around the second unvulcanised rubber sheet **11'** on the moulding drum **80** to form helical turns at regular pitches from one end to the other end of the moulding drum **80**.

Thereafter, the other second unvulcanised rubber sheet **11'** is wrapped around the layer of the twist yarn **16'** a predetermined number of times.

Next, one of the third unvulcanised rubber sheets **14a'** is wrapped around the second unvulcanised rubber sheet **11'** a predetermined number of times, and one of the non-woven fabric sheets **14b'** is then wrapped therearound. This alternate wrapping of a third unvulcanised rubber sheet **14a'** and a non-woven fabric sheet **14b'** is repeated a predetermined number of times (one to thirty times). As a result of the above process, as shown in FIG. **2A**, a stack is formed on the outer periphery of the moulding drum **80**, and is as follows, in the order from nearest to farthest from the moulding drum: the woven fabric **13'**, the first unvulcanised rubber sheet **12'**, the second unvulcanised rubber sheet **11'**, the twist yarn **16'**, the second unvulcanised rubber sheet **11'**, and a layered structure of the third unvulcanised rubber sheets **14a'** and the non-woven fabric sheets **14b'** (FIG. **2A** shows the case where four non-woven fabric sheets **14b'** are contained in the stack.

Next, the moulding drum **80** wrapped with the stack is covered with a rubber sleeve, put into a vulcaniser, and cured therein under predetermined temperature and pressure conditions for a predetermined time. During the time, the first to third unvulcanised rubber sheets **11'**, **12'** and **14a'** are fluidised and crosslinked so that the woven fabric **13'**, the non-woven fabric sheets **14b'** and the twist yarn **16'** are bonded together with the rubber materials to form an integral cylindrical slab. As a result, as shown in FIG. **2B**, a lamination is formed on the outer periphery of the moulding drum **80** and is as follows, in the order from nearest to farthest from the moulding drum: a back face reinforcing fabric **13**, a tension rubber layer **12**, an adhesion rubber layer **11** having a cord **16** embedded therein, and a ribbed rubber layer **14** in which rubber layers **14a** and non-woven fabric layers **14b** are alternately stacked.

Then, the moulding drum **80** is taken out of the vulcaniser, the rubber sleeve is removed, and subsequently the moulded slab is removed.

Next, the slab is cut into three or four axially even pieces, and the outer periphery of each piece is ground circumferentially to form ribs **15**.

Finally, each slab piece is cut into specified widths, and each cut piece is turned over to direct its side having the ribs **15** inward, thereby obtaining a V-ribbed belt **B**.

In fabricating the above V-ribbed belt **B**, the layered structure of the non-woven fabric sheets and the third unvulcanised rubber sheets may be formed firstly by alternately stacking one or more third unvulcanised rubber sheets and one or more non-woven fabric sheets to organise them into an elongate sheet, and then by wrapping the elongate sheet around the second unvulcanised rubber sheet a predetermined number of times. The elongate sheet may consist of a double-layered structure of a third unvulcanised rubber sheet and a non-woven fabric sheet, or a triple-layered structure with a non-woven fabric sheet sandwiched between two third unvulcanised rubber sheets, or a multi-layered structure. In this connection, if a non-woven fabric sheet **14b'** before moulded has a thickness of about 0.20mm or less, the non-woven fabric layer **14b** obtained by moulding it has substantially the same thickness.

As described above, according to the fabrication method of a V-ribbed belt **B** of the present invention, a ribbed rubber layer **14** is formed by one or more third unvulcanised rubber sheets **14a'** and one or more non-woven fabric sheets **14b'**. Therefore, there is no need to cut a short-fiber-containing unvulcanised rubber sheet in an appropriate length and align the orientation of short fibers with the belt widthwise direction, unlike the case of fabricating a friction drive belt in which the ribbed rubber layer **14** is made from short-fiber-containing rubber.

Next, a description will be made of a belt drive system **30** using the V-ribbed belt **B**.

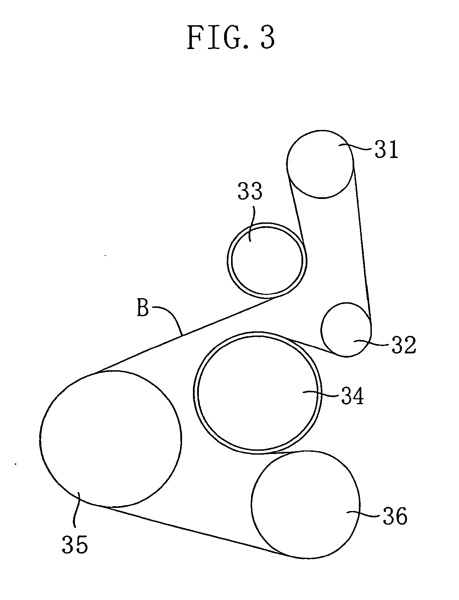

FIG. **3** shows a pulley layout of a serpentine belt drive system for automotive engine accessories, in which a V-ribbed belt **B** is wrapped around the pulleys.

This pulley layout for serpentine belt accessory drive is composed of an accessory A pulley **31** located at an uppermost position, an accessory B pulley **32** placed below the accessory A pulley **31**, a tensioner pulley **33** placed to the lower left of the accessory A pulley **31**, an accessory C pulley **34** placed below the tensioner pulley **33**, a crankshaft pulley **35** placed to the lower left of the tensioner pulley **33**, and an accessory D pulley **36** placed to the lower right of the crankshaft pulley **35**. All the pulleys other than the tensioner pulley **33** and the accessory C pulley **34**, which are both flat pulleys, are ribbed pulleys. The V-ribbed belt **B** is wrapped around the accessory A pulley **31** to make contact at its ribs **15**, then wrapped around the tensioner pulley **33** to make contact at its belt back face, then sequentially wrapped around the crankshaft pulley **35** and the accessory D pulley **36** to make contact at its ribs **15**, then wrapped around the accessory C pulley **34** to make contact at its belt back face, then wrapped around the accessory B pulley **32** to make contact at its ribs **15**, and finally returned to the accessory A pulley **31**. This V-ribbed pulley **B** is driven into clockwise rotation by the crankshaft pulley 35, thereby driving the accessory pulleys including the accessory A pulley **31**.

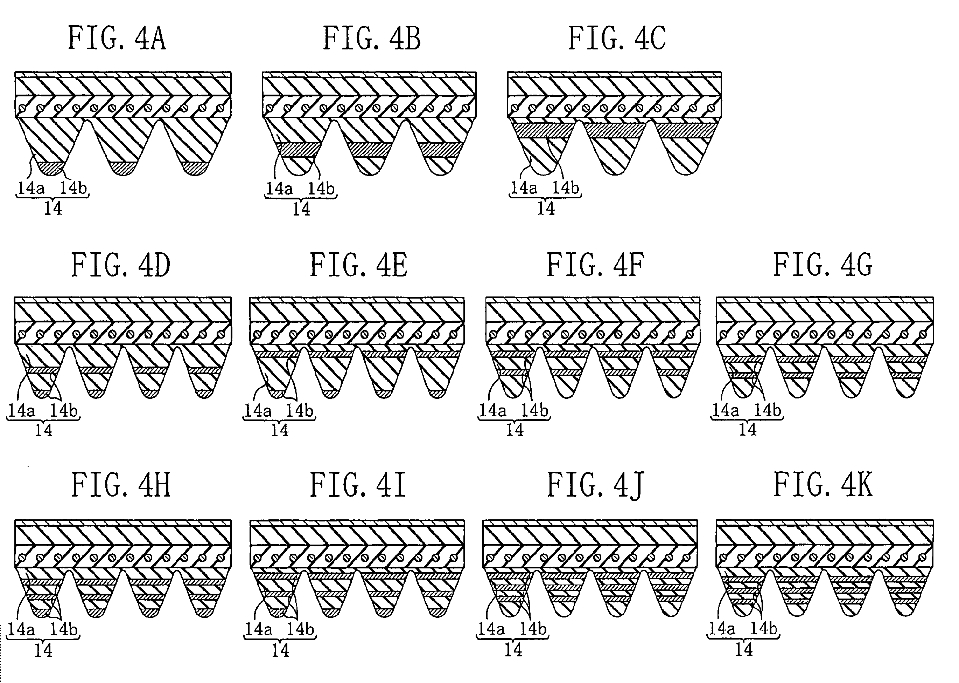

V-ribbed belts according to other embodiments of the present invention include those containing a single non-woven fabric layer **14b** as shown in FIGS. **4A** to **4C**, those containing two non-woven fabric layers **14b** as shown in FIGS. **4D** to **4G**, and those containing three or more non-woven fabric layers **14b** as shown in FIGS. **4H** to **4K**. As described before, the shearing force acting on the belt is greater, in the ribbed rubber layer **14**, toward the belt outer periphery than toward the belt inner periphery. If the proportion of non-woven fabric layers **14b** contained in the ribbed rubber layer **14** is greater toward the belt outer periphery, the risk of delamination is increased. Therefore, the preference in this respect among the above V-ribbed belts is not for those in which a non-woven fabric layer **14b** is disposed toward the rib roots as shown in FIGS. **4C, 4E, 4F, 4I** and **4J,** but for those in which a non-woven fabric layer **14b** is disposed at the rib tops and rib mid-portions as shown in the other figures. Furthermore, since the travelling belt makes contact with a pulley beginning at the rib tops, a lower coefficient of friction at the rib tops leads to a greater suppression of occurrence of abnormal sounds during the belt travel. Therefore, the preference in this respect is not for V-ribbed belts in which a rubber layer **14a** is disposed at the rib tops as shown in FIGS. **4B, 4C, 4F, 4G, 4J** and **4K**, but for those in which a non-woven fabric layer **14b** is disposed at the rib tops as shown in the other figures. Considering both the respects together, V-ribbed belts as shown in FIGS. **4A, 4D** and **4H** are preferable.

Although the above embodiments are directed to V-ribbed belts, applicable belts for this invention are not limited to V-ribbed belts but include other types of friction drive belts such as V-belts.

*Working Examples*

A description will be made of belt evaluations based on actually conducted tests.

(Belts for Test Evaluation)

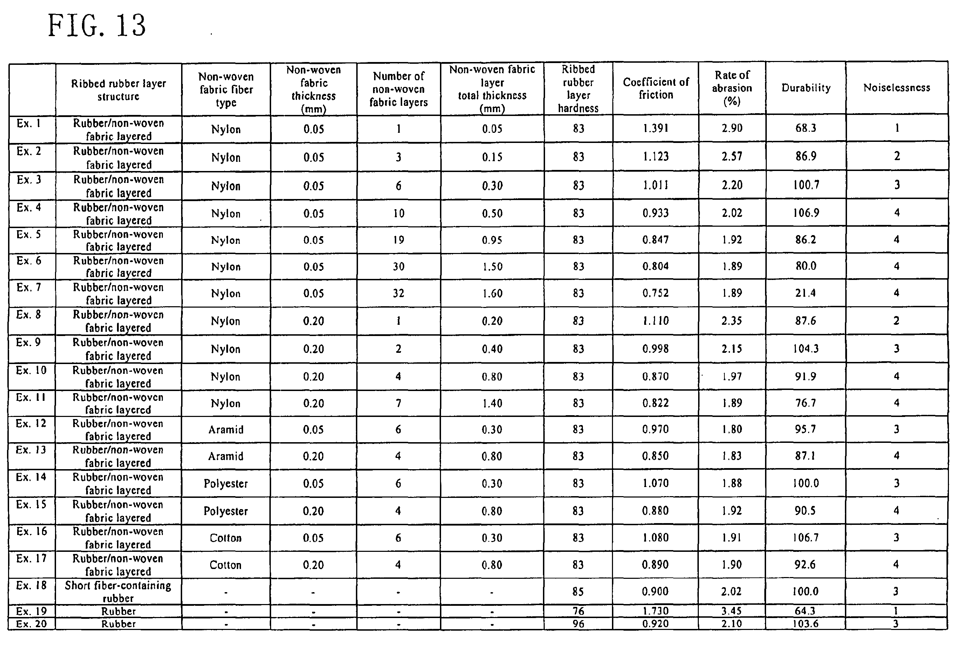

V-ribbed belts for test evaluation were prepared as below. The belt structures are also shown in FIG. **13**.

<Example 1>

Prepared as Example 1 was a V-ribbed belt (rib height: 2.00 mm) which has the same structure as in the first-mentioned embodiment and in which a single non-woven fabric layer was formed using a non-woven nylon fiber fabric sheet of 0.05 mm thickness subjected to adhesion treatment with resorcinol-formaldehyde latex (RFL) liquid and rubber cement. Chloroprene rubber (CR) was used as the rubber component of a rubber composition constituting each of the adhesion rubber layer, the tension rubber layer and the rubber layer of the ribbed rubber layer. The back face reinforcing fabric was formed using a woven nylon fiber fabric subjected to adhesion treatment with rubber cement. The cord was formed using a twist yarn (Z-twisted) of polyethylene terephthalate (PET) fibers subjected to adhesion treatment with resorcinol-formaldehyde latex (RFL) liquid and rubber cement and stretch thermoforming process.

<Example 2>

Prepared as Example 2 was a V-ribbed belt which has the same structure as in Example 1 except that three non-woven fabric layers were formed using non-woven nylon fiber fabric sheets of 0.05 mm thickness each.

<Example 3>

Prepared as Example 3 was a V-ribbed belt which has the same structure as in Example 1 except that six non-woven fabric layers were formed using non-woven nylon fiber fabric sheets of 0.05 mm thickness each.

<Example 4>

Prepared as Example 4 was a V-ribbed belt which has the same structure as in Example 1 except that ten non-woven fabric layers were formed using non-woven nylon fiber fabric sheets of 0.05 mm thickness each.

<Example 5>

Prepared as Example 5 was a V-ribbed belt which has the same structure as in Example 1 except that 19 non-woven fabric layers were formed using non-woven nylon fiber fabric sheets of 0.05 mm thickness each.

<Example 6>

Prepared as Example 6 was a V-ribbed belt which has the same structure as in Example 1 except that 30 non-woven fabric layers were formed using non-woven nylon fiber fabric sheets of 0.05 mm thickness each.

<Example 7>

Prepared as Example 7 was a V-ribbed belt which has the same structure as in Example 1 except that 32 non-woven fabric layers were formed using non-woven nylon fiber fabric sheets of 0.05 mm thickness each.

<Example 8>

Prepared as Example 8 was a V-ribbed belt which has the same structure as in Example 1 except that a single non-woven fabric layer was formed using a non-woven nylon fiber fabric sheet of 0.20 mm thickness.

<Example 9>

Prepared as Example 9 was a V-ribbed belt which has the same structure as in Example 1 except that two non-woven fabric layers were formed using non-woven nylon fiber fabric sheets of 0.20 mm thickness each.

<Example 10>

Prepared as Example 10 was a V-ribbed belt which has the same structure as in Example 1 except that four non-woven fabric layers were formed using non-woven nylon fiber fabric sheets of 0.20 mm thickness each.

<Example 11>

Prepared as Example 11 was a V-ribbed belt which has the same structure as in Example 1 except that seven non-woven fabric layers were formed using non-woven nylon fiber fabric sheets of 0.20 mm thickness each.

<Example 12>

Prepared as Example 12 was a V-ribbed belt which has the same structure as in Example 1 except that six non-woven fabric layers were formed using non-woven aramid fiber fabric sheets of 0.05 mm thickness each.

<Example 13>

Prepared as Example 13 was a V-ribbed belt which has the same structure as in Example 1 except that four non-woven fabric layers were formed using non-woven aramid fiber fabric sheets of 0.20 mm thickness each.

<Example 14>

Prepared as Example 14 was a V-ribbed belt which has the same structure as in Example 1 except that six non-woven fabric layers were formed using non-woven polyester fiber fabric sheets of 0.05 mm thickness each.

<Example 15>

Prepared as Example 15 was a V-ribbed belt which has the same structure as in Example 1 except that four non-woven fabric layers were formed using non-woven polyester fiber fabric sheets of 0.20 mm thickness each.

<Example 16>

Prepared as Example 16 was a V-ribbed belt which has the same structure as in Example 1 except that six non-woven fabric layers were formed using non-woven cotton fabric sheets of 0.05 mm thickness each.

<Example 17>

Prepared as Example 17 was a V-ribbed belt which has the same structure as in Example 1 except that four non-woven fabric layers were formed using non-woven cotton fabric sheets of 0.20 mm thickness each.

<Example 18>

Prepared as Example 18 was a V-ribbed belt which has the same structure as in Example 1 except that a ribbed rubber layer was formed from aramid short fiber-containing rubber.

<Example 19>

Prepared as Example 19 was a V-ribbed belt which has the same structure as in Example 1 except that a ribbed rubber layer was formed from a low-hardness rubber composition (containing no short fibers).

<Example 20>

Prepared as Example 20 was a V-ribbed belt which has the same structure as in Example 1 except that a ribbed rubber layer was formed from a high-hardness rubber composition (containing no short fibers).

(Test Evaluation Method)

< Hardness of Ribbed Rubber Layer >

For each of the V-ribbed belts of Examples 1 to 20, the hardness of the ribbed rubber layer was measured using an A-type spring hardness tester specified in JIS K6301.

<Coefficient of Friction at Rib Surface>

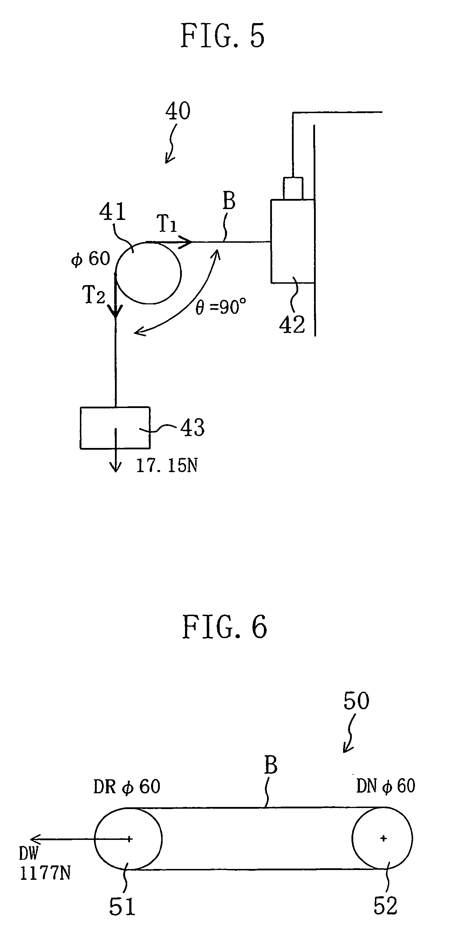

FIG. **5** shows a belt coefficient-of-friction measurement tester **40** used for measuring the coefficient of friction at the surface of the ribbed rubber layer. This belt coefficient-of-friction measurement tester **40** is composed of a ribbed pulley **41** of 60mm diameter and a load cell **42** placed to the side of the ribbed pulley **41**. The load cell **42** is arranged so that the later-described specimen is wrapped around it after being extended horizontally toward the ribbed pulley **41**, i.e., so that the angle at which the specimen is wrapped around it is 90 degrees.

Strip-shaped specimens were produced from the V-ribbed belts of Examples 1 to 20. Each specimen was fixed at one end to the load cell **42** to direct its rib side downward, wrapped around the ribbed pulley **41** to make contact at its rib side, and then got down with a 1.75kg weight **43** hung at the other end. Subsequently, the ribbed pulley **41** was rotated at 20 rpm in the direction of pulling up of the weight **43,** and during the time, the tension **T1** applied to the horizontal portion of the specimen between the load cell **42** and the ribbed pulley **41** was measured with the load cell **42**. In this case, the tension **T2** applied to the vertical portion of the specimen between the ribbed pulley **41** and the weight **43** is 17.15N corresponding to the weight **43.** Then, the coefficient of friction was calculated according to the following formula:

$$\mu' = \frac{ln\frac{T_1}{T_2}}{\theta}$$

<Abrasion Rate of the Rib Surface>

FIG. **6** shows the layout of a belt run tester **50** for evaluating V-ribbed belts on an abrasion resistance test. This belt durability tester is composed of a pair of pulleys **51** and **52** of 60mm diameter arranged to the right and left, wherein the left-side pulley is a drive pulley and the right-side pulley is a driven pulley.

After each of the V-ribbed belts of Examples 1 to 20 was measured in weight, it was subjected to a belt run test. In this test, each belt was wrapped around both the ribbed pulleys **51** and **52** to make contact at its rib side, the left-side ribbed pulley **51** which is a drive pulley was pulled sideward to impose a deadweight of 1177N thereon, a rotation load of 3.8kW was applied to the right-side ribbed pulley **52** which is a driven pulley, the left-side ribbed pulley **51** was rotated at 3500 rpm for 24 hours under room temperature conditions. Then, each belt after 24 hours run was measured in weight, and its rate of abrasion was calculated according to the following formula:

$$Rate\ of\ abrasion = \frac{Initial\ weight - after run\ weight}{Initial\ weight} \times 100$$

<Running Durability>

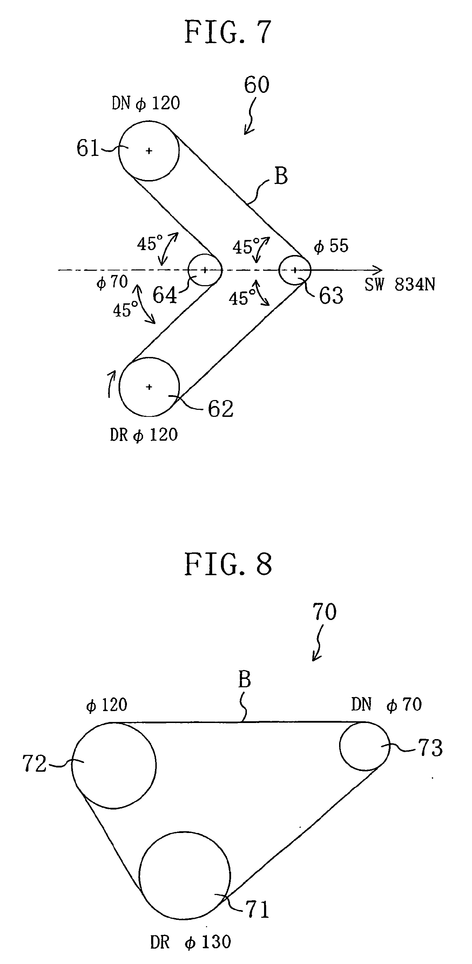

FIG. 7 shows the layout of a belt run tester **60** for durability evaluation on V-ribbed belts. This belt run tester **60** is composed of large-diameter ribbed pulleys **61** and **62** of 120mm diameter disposed one above the other (the upper is a driven pulley and the lower is a drive pulley), an idler pulley **64** of 70mm diameter placed to the right of and at a height intermediate the large-diameter ribbed pulleys, and a small-diameter ribbed pulley **63** of 45mm pulley diameter disposed to the right of the idler pulley **64**. The idler pulley **64** is positioned so that the angle at which the belt is wrapped around it is 90 degrees.

A belt run test was conducted on each of the V-ribbed belts of the above Examples 1 to 20. In the belt run test, each belt was wrapped around the three ribbed pulleys **61** to **63** to make contact at its rib side and wrapped around the idler pulley **64** to make contact at its back face, the small-diameter ribbed pulley **63** was pulled sideward to impose a set weight of 834N thereon, and the lower ribbed pulley **62**, which is a drive pulley, was rotated at 4900 rpm in an atmosphere of 85°C±3°C. The time from the start of the run until the occurrence of a crack was measured under these conditions, and the relative running durability was calculated with respect to the time data from Example 18 which is a reference value of 100.

<Noiselessness>

FIG. **8** shows the layout of a belt run tester **70** for noiselessness evaluation on V-ribbed belts. This belt run tester **70** is composed of a drive ribbed pulley **71** of 130mm diameter, a larger driven ribbed pulley **72** of 120mm diameter placed to the upper left of the drive ribbed pulley **71**, and a smaller driven ribbed pulley 73 of 70mm diameter placed to the upper right of the drive ribbed pulley **71**.

A belt run test was conducted on each of the V-ribbed pulleys of Examples 1 to 20 by wrapping each belt around the three ribbed pulleys **71** to **73** to make contact at its rib side and rotating the drive ribbed pulley **71**. The noise production of each belt at the smaller drive ribbed pulley **73** was sensorily evaluated at five levels.

(Test Evaluation Results)

The test results are shown in FIG. **13**. In this case, Example 18 in which the ribbed rubber layer is made of short fiber-containing rubber can be considered as an example of conventional V-ribbed belts.

<Hardness of Ribbed Rubber Layer>

In each of Example 1 to 17 in which the ribbed rubber layer has a rubber/non-woven fabric layered structure, the ribbed rubber layer has a hardness of 83. This shows that the hardness of the ribbed rubber layer does not depend on the type and thickness of non-woven fabric and the total thickness of non-woven fabric layers. In Example 18 (conventional example) in which the ribbed rubber layer is made of a rubber composite, i.e., short fiber-containing rubber, the ribbed rubber layer has a hardness of 85, which is slightly higher than those of Examples 1 to 17. Examples 19 and 20 in which the ribbed rubber layer is made of rubber show the results on which respective hardnesses of their rubber compositions reflected.

<Coefficient of Friction at Ribbed Rubber Layer Surface>

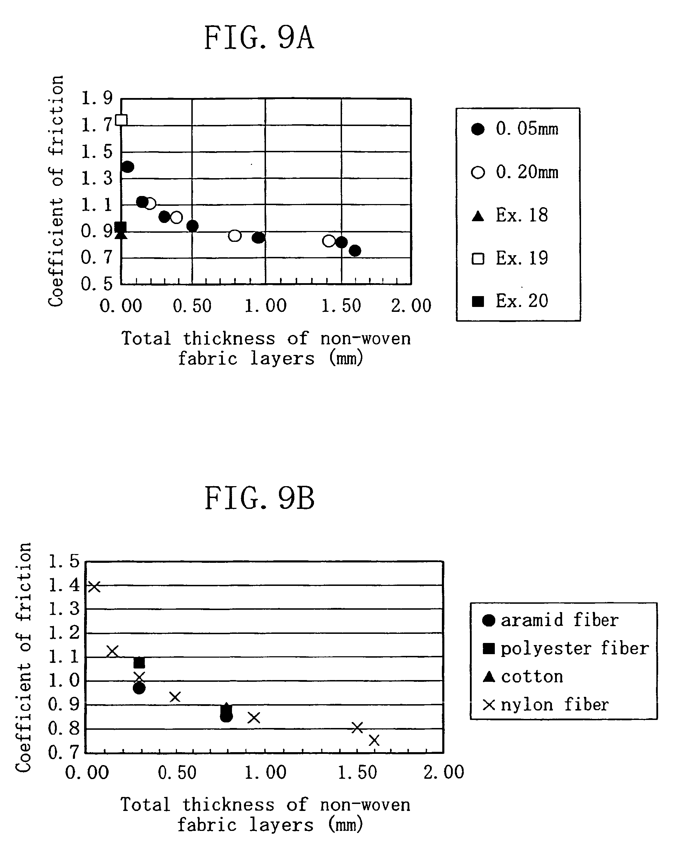

FIG. **9A** shows the relation between the total thickness of non-woven fabric layers and the coefficient of friction at the ribbed rubber layer surface for Examples 1 to 11 using nylon fiber non-woven fabrics, and for comparison, also that for Examples 18 to 20.
Referring to FIG. **9A**, it is shown that as the total thickness of the non-woven fabric layers is increased, the coefficient of friction is decreased. This is because the non-woven fabrics exposed at the surface of the ribbed rubber layer reduced the coefficient of friction. The effect of decreasing the coefficient of friction is outstanding for total thicknesses of non-woven fabric layers up to 0.5mm (25% of the ribbed rubber layer thickness), but it is small for total thicknesses of non-woven fabric layers over 0.5mm. Furthermore, as seen from Examples 1 to 7 having a non-woven fabric thickness of 0.05mm and Examples 8 to 11 having a non-woven fabric thickness of 0.20mm, the coefficient of friction is not affected by the thickness of each non-woven fabric, but given as an overall characteristic across the surface of the ribbed rubber layer by the total thickness of non-woven fabric layers. Example 18 (conventional example) in which the ribbed rubber layer is made of short fiber-containing rubber has a coefficient of friction of 0.900. In order to obtain an equivalent coefficient of friction, the total thickness of non-woven fabric layers needs to be 0.50mm (25% of the ribbed rubber layer thickness) or more. Out of Examples 19 and 20 in which the ribbed rubber layer is made of rubber, Example 19 of low rubber hardness has a very high coefficient of friction, but Example 20 of high rubber hardness has an equivalent coefficient of friction to Example 18.
FIG. **9B** shows the relation between the total thickness of non-woven fabric layers ant the coefficient of friction at the surface of the ribbed rubber layer for Examples 1 to 7 and 12 to 17.
Referring to FIG. **9B**, it is shown that the coefficient of friction is not affected by which of nylon fibers, aramid fibers, polyester fibers and cotton is used for the non-woven fabric, i.e., the fiber type, but depends on the total thickness of non-woven fabric layers.

< Abrasion Rate of Ribbed Rubber Layer>

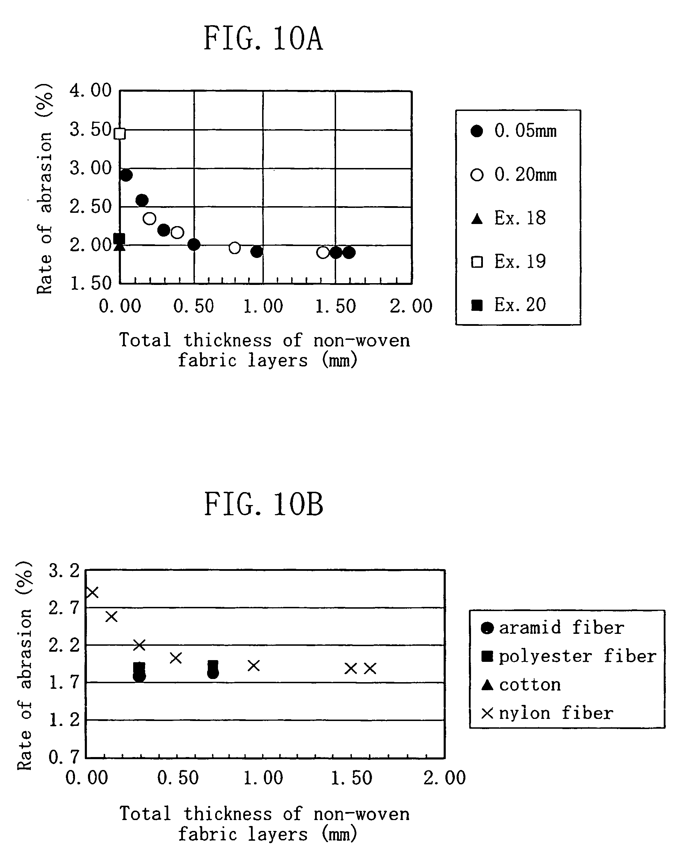

FIG. **10A** shows the relation between the total thickness of non-woven fabric layers and the rate of abrasion of the ribbed rubber layer for Examples 1 to 11, and for comparison, also that for Examples 18 to 20. FIG. **10B** shows the relation between the total thickness of non-woven fabric layers and the rate of abrasion of the ribbed rubber layer for Examples 1 to 7 and 12 to 17.
As seen from FIGS. **10A** and **10B,** the rate of abrasion is also given as an overall characteristic across the surface of the ribbed rubber layer like the coefficient of friction. Namely, there exists a correlation between the rate of abrasion and the coefficient of friction.
More specifically, reference to FIG. **10A** shows that as the total thickness of the non-woven fabric layers is increased, the rate of abrasion is decreased. The effect of decreasing the rate of abrasion is outstanding for total thicknesses of non-woven fabric layers up to 0.5mm (25% of the ribbed rubber layer thickness), but it is small for total thicknesses of non-woven fabric layers over 0.5mm. Furthermore, as seen from Examples 1 to 7 having a non-woven fabric thickness of 0.05mm and Examples 8 to 11 having a non-woven fabric thickness of 0.20mm, the rate of abrasion is not affected by the thickness of each non-woven fabric, but given as an overall characteristic across the ribbed rubber layer by the total thickness of non-woven fabric layers. Example 18 (conventional example) in which the ribbed rubber layer is made of short fiber-containing rubber has a rate of abrasion of 2.02%. In order to obtain an equivalent rate of abrasion, the total thickness of non-woven fabric layers needs to be 0.50mm (25% of the ribbed rubber layer thickness) or more. Out of Examples 19 and 20 in which the ribbed rubber layer is made of rubber, Example 19 of low rubber hardness has a very high rate of abrasion, but Example 20 of high rubber hardness has an equivalent rate of abrasion to Example 18. Moreover, it is seen from FIG. **10B** that the rate of abrasion is not affected by which of nylon fibers, aramid fibers, polyester fibers and cotton is used for the non-woven fabric, i.e., the fiber type, but depends on the total thickness of non-woven fabric layers.

<Running Durability>

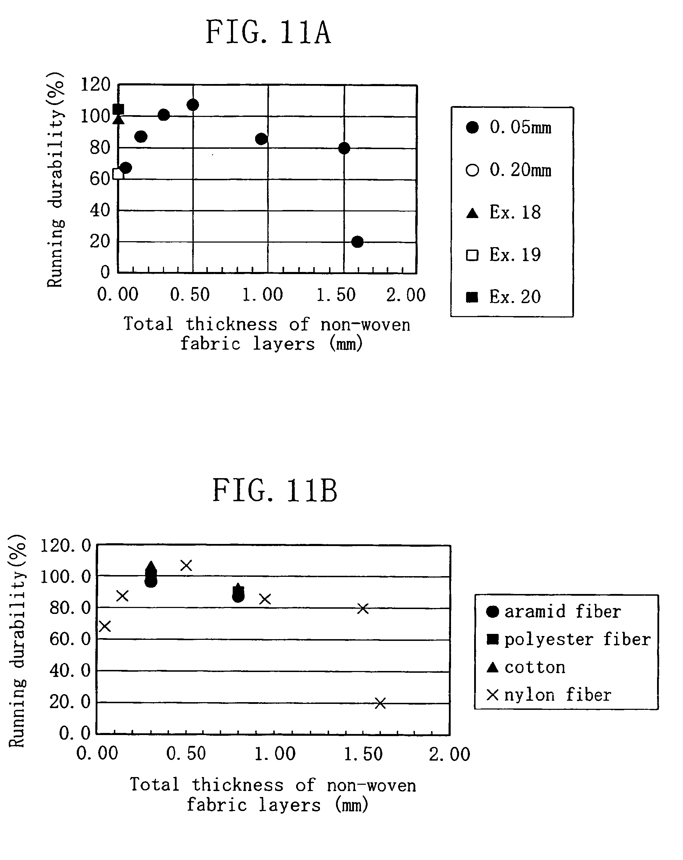

FIG. **11A** shows the relation between the total thickness of non-woven fabric layers and the running durability of the relevant belt for Examples 1 to 11 using nylon fiber non-woven fabrics, and for comparison, also that for Examples 18 to 20.

Referring to FIG. **11A,** it is shown that the running durability is improved with increasing total thickness of non-woven fabric layers up to 0.5mm (25% of the ribbed rubber layer thickness), while on the other hand it is deteriorated with increasing total thickness of non-woven fabric layers over 0.5mm. The running durability, in practice, needs to be 80 or more per cent of the running durability of Example 18 (conventional example), i.e., 80% or more, and therefore the total thickness of non-woven fabric layers needs to be at least 0.10mm (5% of the ribbed rubber layer thickness) and at most 1.5mm (75% of the ribbed rubber layer thickness). The running durability is preferably equal to or greater than that of Example 18, i.e., 100% or more, and in that case, the total thickness of non-woven fabric layers needs to be at least 0.3mm (15% of the ribbed rubber layer thickness) and at most 0.7mm (35% of the ribbed rubber layer thickness). Furthermore, as seen from Examples 1 to 7 having a non-woven fabric thickness of 0.05mm and Examples 8 to 11 having a non-woven fabric thickness of 0.20mm, the running durability is also not affected by the thickness of each non-woven fabric, but given as an overall characteristic across the ribbed rubber layer by the total thickness of non-woven fabric layers. Out of Examples 19 and 20 in which the ribbed rubber layer is made of rubber, Example 19 of low rubber hardness has a very low running durability, but Example 20 of high rubber hardness has an equivalent running durability to Example 18.

FIG. **11B** shows the relation between the total thickness of non-woven fabric layers and the running durability of the relevant belt for Examples 1 to 7 and 12 to 17.

Referring to FIG. **11B**, it is shown that the running durability is also not affected by which of nylon fibers, aramid fibers, polyester fibers and cotton is used for the non-woven fabric, i.e., the fiber type, but depends on the total thickness of non-woven fabric layers.

<Noiselessness>

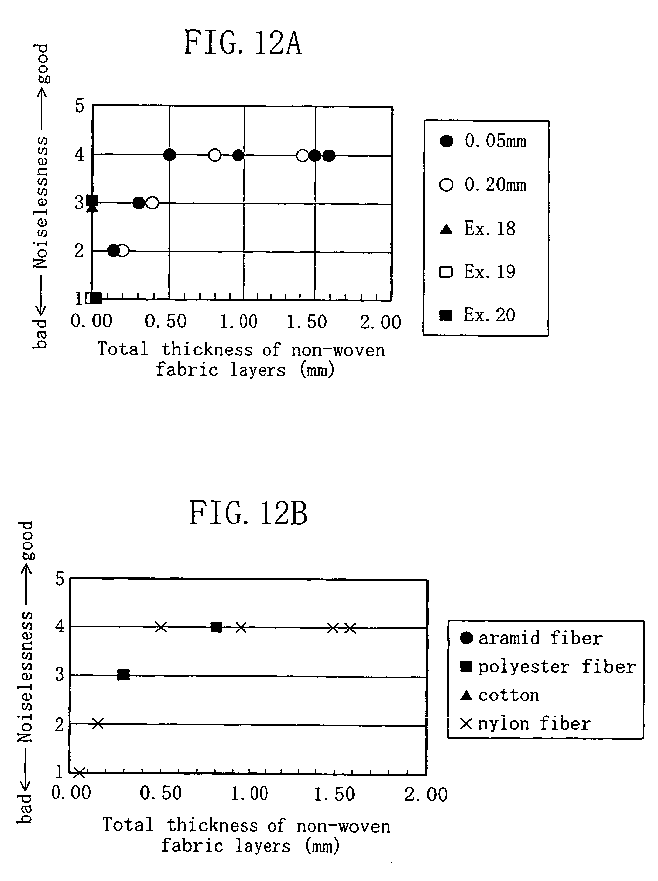

FIG. **12A** shows the relation between the total thickness of non-woven fabric layers and the noiselessness of the relevant belt for Examples 1 to 11 using nylon fiber non-woven fabrics, and for comparison, also that for Examples 18 to 20.

Referring to FIG. **12A**, it is shown that the noiselessness is improved, i.e., abnormal sounds are reduced, with increasing total thickness of non-woven fabric layers up to 0.5mm (25% of the ribbed rubber layer thickness), but increase in the total thickness of non-woven fabric layers over 0.5mm does not lead to further improved noiselessness. Furthermore, as seen from Examples 1 to 7 having a non-woven fabric thickness of 0.05mm and Examples 8 to 11 having a non-woven fabric thickness of 0.20mm, the noiselessness is not affected by the thickness of each non-woven fabric, but given as an overall characteristic across the ribbed rubber layer by the total thickness of non-woven fabric layers. Example 18 (conventional example) in which the ribbed rubber layer is made of short fiber-containing rubber has a noiselessness level of 3. In order to obtain an equivalent noiselessness level, the total thickness of non-woven fabric layers needs to be 0.30mm (15% of the ribbed rubber layer thickness) or more. Out of Examples 19 and 20 in which the ribbed rubber layer is made of rubber, Example 19 of low rubber hardness has a very poor noiselessness, but Example 20 of high rubber hardness has an equivalent noiselessness to Example 18.

FIG. **12B** shows the relation between the total thickness of non-woven fabric layers and the noiselessness of the relevant belt for Examples 1 to 7 and 12 to 17.

Referring to FIG. **12B**, it is shown that the noiselessness is also not affected by which of nylon fibers, aramid fibers, polyester fibers and cotton is used for the non-woven fabric, i.e., the fiber type, but depends on the total thickness of non-woven fabric layers.

The foregoing discloses and describes merely exemplary embodiments of the present invention. One skilled in the art will readily recognise, from such discussion and accompanying drawings and claims, that various changes, modifications and variations can be made therein without departing from the scope of the present invention as defined by the claims.

**Claims**

1. A V-ribbed belt, used by being wrapped around a plurality of pulleys, for transmitting power by friction between its belt body and each of the pulleys, wherein a working part (14) of the V-ribbed belt body through which power is transmitted has a plurality of ribs (15) disposed at regular pitches in the belt widthwise direction **characterized in that**

said ribbed working part (14) has a structure in which one or more rubber layers (14a) and one or more non-woven fabric layers (14b) are alternately stacked along the thickness of the belt, and
a total thickness of the non-woven fabric layers (14b) in each of the plurality of ribs is 25 % to 75 %, both inclusive, of the thickness of the ribbed working part (14).

2. The V-ribbed belt of Claim 1, wherein proportion of the non-woven fabric layers (14b) in the ribbed working part (14) is greater toward the belt inner periphery than toward the belt outer periphery.

3. The V-ribbed belt of Claim 1 or 2, wherein a rib top is constituted by the non-woven fabric layer (14b).

4. A method for fabricating the V-ribbed belt of Claim 1, the method comprising the steps of:

forming, on the outer periphery of a moulding drum, a structure in which one or more unvulcanised rubber layers (14a') and one or more non-woven fabric

**Patentansprüche**

1. Ein Keilrippenriemen, der dadurch verwendet wird, dass er um eine Vielzahl von Rollen gewickelt ist, zum Übertragen von Energie durch Reibung zwischen seinem Riemenkörper und jeder der Rollen, wobei ein Verschleißteil (14) des Keilrippenriemenkörpers, durch welchen Energie übertragen wird, eine Vielzahl von Rippen (15) aufweist, die in regelmäßigen Abständen in der Riemen-Breitseitenrichtung angeordnet sind
**dadurch gekennzeichnet, dass**
der gerippte Verschleißteil (14) eine Struktur aufweist, in der eine oder mehrere Kautschukschichten (14a) und eine oder mehrere Vliesschichten (14b) alternierend entlang der Dicke des Riemens gestapelt sind, und
eine Gesamtdicke der Vliesschichten (14b) in jeder aus der Vielzahl von Rippen 25 % bis 75 %, beide geschlossen, der Dicke des gerippten Verschleißteils (14) beträgt.

2. Der Keilrippenriemen nach Anspruch 1, wobei der Anteil der Vliesschichten (14b) in dem gerippten Verschleißteil (14) in Richtung des Riemen-Innenumfangs größer ist als in Richtung des Riemen-Außenumfangs.

3. Der Keilrippenriemen nach Anspruch 1 oder 1, wobei eine Rippen-Spitze aus der Vliesschicht (14b) besteht.

4. Ein Verfahren zur Herstellung des Keilrippenriemens nach Anspruch 1, wobei das Verfahren die folgenden Schritte umfasst:

Bilden, auf den Außenumfang eines Formzylinders, einer Struktur, in der eine oder mehrere unvulkanisierten Schichten (14a') und eine oder mehrere Vliesschichten (14b') alternierend gestapelt sind, um den gesamten Umfang des Formzylinders zu bedecken; und
Anwenden von Wärme und Druck auf die Schichtstruktur der unvulkanisierten Kautschukschicht oder -schichten (14a') und der Vliesschicht oder -schichten (14b'), um eine integrale Laminierung bereitzustellen.

**Revendications**

1. Une courroie striée, utilisée en étant enveloppée autour d'une pluralité de poulies, pour transmettre le courant par frottement entre le corps de la courroie et chacune des poulies, où une partie (14) du corps de la courroie striée à travers lequel le courant est transmis possède une pluralité de stries (15) disposées à pas réguliers dans le sens de la largeur de la courroie
**caractérisée en ce que**
ladite partie striée (14) a une structure dans laquelle une ou plusieurs couches de caoutchouc (14a) et une ou plusieurs couches de tissu non-tissé (14b) sont alternativement superposées sur l'épaisseur de la courroie, et
une totale épaisseur des couches de tissu non-tissé (14b) dans chacune des pluralités des stries est de 25 à 75%, tous deux incluant l'épaisseur de la partie striée (14).

2. La courroie striée de la revendication 1, où la proportion de couches de tissu non-tissé (14b) dans la partie striée (14) est plus importante vers la périphérie interne de la courroie que vers la périphérie externe.

3. La courroie striée de la revendication 1 ou 2, où le dessus de la strie est constituée par la couche de tissu non-tissé (14b).

4. Une méthode pour fabriquer la courroie striée de la réclamation 1, la méthode comprenant les étapes de :

formation, sur la périphérie externe d'un tambour profilé, d'une structure dans laquelle une ou plusieurs couches de caoutchouc non vulcanisé (14a') et une ou plusieurs couches de tissu non-tissé (14b') sont alternativement superposées pour couvrir la circonférence totale du tambour profilé ; et
application de chaleur et de pression sur la structure stratifiée de la ou des couches de caoutchouc non vulcanisé (14a') et la ou les couches de tissu non-tissé (14b') pour fournir une couche intégrale.

# FIG. 1

EP 1 510 726 B1

## FIG. 2A

## FIG. 2B

FIG. 3

FIG. 4A

FIG. 4B

FIG. 4C

14a 14b
14

14a 14b
14

14a 14b
14

FIG. 4D

FIG. 4E

FIG. 4F

FIG. 4G

14a 14b
14

14a 14b
14

14a 14b
14

14a 14b
14

FIG. 4H

FIG. 4I

FIG. 4J

FIG. 4K

14a 14b
14

14a 14b
14

14a 14b
14

14a 14b
14

# FIG. 5

# FIG. 6

# FIG. 7

DN φ120

61

60

B

45° 45° φ55

φ70 64 63 SW 834N

45° 45°

62

DR φ120

# FIG. 8

70

B

φ120 DN φ70

72 73

71

DR φ130

# FIG. 9A

Total thickness of non-woven fabric layers (mm)

Legend:
- ● 0.05mm
- ○ 0.20mm
- ▲ Ex. 18
- □ Ex. 19
- ■ Ex. 20

# FIG. 9B

Total thickness of non-woven fabric layers (mm)

Legend:
- ● aramid fiber
- ■ polyester fiber
- ▲ cotton
- × nylon fiber

## FIG. 10A

## FIG. 10B

## FIG. 11A

Legend:
- ● 0.05mm
- ○ 0.20mm
- ▲ Ex. 18
- □ Ex. 19
- ■ Ex. 20

Y-axis: Running durability (%)
X-axis: Total thickness of non-woven fabric layers (mm)

## FIG. 11B

Legend:
- ● aramid fiber
- ■ polyester fiber
- ▲ cotton
- ✕ nylon fiber

Y-axis: Running durability (%)
X-axis: Total thickness of non-woven fabric layers (mm)

## FIG. 12A

Noiselessness — bad ← → good

Total thickness of non-woven fabric layers (mm)

Legend:
- ● 0.05mm
- ○ 0.20mm
- ▲ Ex. 18
- □ Ex. 19
- ■ Ex. 20

## FIG. 12B

Noiselessness — bad ← → good

Total thickness of non-woven fabric layers (mm)

Legend:
- ● aramid fiber
- ■ polyester fiber
- ▲ cotton
- × nylon fiber

23

# FIG. 13

| | Ribbed rubber layer structure | Non-woven fabric fiber type | Non-woven fabric thickness (mm) | Number of non-woven fabric layers | Non-woven fabric layer total thickness (mm) | Ribbed rubber layer hardness | Coefficient of friction | Rate of abrasion (%) | Durability | Noiselessness |
|---|---|---|---|---|---|---|---|---|---|---|
| Ex. 1 | Rubber/non-woven fabric layered | Nylon | 0.05 | 1 | 0.05 | 83 | 1.391 | 2.90 | 68.3 | 1 |
| Ex. 2 | Rubber/non-woven fabric layered | Nylon | 0.05 | 3 | 0.15 | 83 | 1.123 | 2.57 | 86.9 | 2 |
| Ex. 3 | Rubber/non-woven fabric layered | Nylon | 0.05 | 6 | 0.30 | 83 | 1.011 | 2.20 | 100.7 | 3 |
| Ex. 4 | Rubber/non-woven fabric layered | Nylon | 0.05 | 10 | 0.50 | 83 | 0.933 | 2.02 | 106.9 | 4 |
| Ex. 5 | Rubber/non-woven fabric layered | Nylon | 0.05 | 19 | 0.95 | 83 | 0.847 | 1.92 | 86.2 | 4 |
| Ex. 6 | Rubber/non-woven fabric layered | Nylon | 0.05 | 30 | 1.50 | 83 | 0.804 | 1.89 | 80.0 | 4 |
| Ex. 7 | Rubber/non-woven fabric layered | Nylon | 0.05 | 32 | 1.60 | 83 | 0.752 | 1.89 | 21.4 | 4 |
| Ex. 8 | Rubber/non-woven fabric layered | Nylon | 0.20 | 1 | 0.20 | 83 | 1.110 | 2.35 | 87.6 | 2 |
| Ex. 9 | Rubber/non-woven fabric layered | Nylon | 0.20 | 2 | 0.40 | 83 | 0.998 | 2.15 | 104.3 | 3 |
| Ex. 10 | Rubber/non-woven fabric layered | Nylon | 0.20 | 4 | 0.80 | 83 | 0.870 | 1.97 | 91.9 | 4 |
| Ex. 11 | Rubber/non-woven fabric layered | Nylon | 0.20 | 7 | 1.40 | 83 | 0.822 | 1.89 | 76.7 | 4 |
| Ex. 12 | Rubber/non-woven fabric layered | Aramid | 0.05 | 6 | 0.30 | 83 | 0.970 | 1.80 | 95.7 | 3 |
| Ex. 13 | Rubber/non-woven fabric layered | Aramid | 0.20 | 4 | 0.80 | 83 | 0.850 | 1.83 | 87.1 | 4 |
| Ex. 14 | Rubber/non-woven fabric layered | Polyester | 0.05 | 6 | 0.30 | 83 | 1.070 | 1.88 | 100.0 | 3 |
| Ex. 15 | Rubber/non-woven fabric layered | Polyester | 0.20 | 4 | 0.80 | 83 | 0.880 | 1.92 | 90.5 | 4 |
| Ex. 16 | Rubber/non-woven fabric layered | Cotton | 0.05 | 6 | 0.30 | 83 | 1.080 | 1.91 | 106.7 | 3 |
| Ex. 17 | Rubber/non-woven fabric layered | Cotton | 0.20 | 4 | 0.80 | 83 | 0.890 | 1.90 | 92.6 | 4 |
| Ex. 18 | Short fiber-containing rubber | - | - | - | - | 85 | 0.900 | 2.02 | 100.0 | 3 |
| Ex. 19 | Rubber | - | - | - | - | 76 | 1.730 | 3.45 | 64.3 | 1 |
| Ex. 20 | Rubber | - | - | - | - | 96 | 0.920 | 2.10 | 103.6 | 3 |

EP 1 510 726 B1

**EP 1 510 726 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5643378 A
- JP 6040497 A
- JP 7063242 A
- JP 7029330 A
- JP 10338377 A
- JP 2001146942 A
- JP 2001317595 A